Europäisches Patentamt

European Patent Office

Office européen des brevets

(11) Numéro de publication: **0 568 747 A1**

# DEMANDE DE BREVET EUROPEEN

(21) Numéro de dépôt: 92401188.5

(22) Date de dépôt: 24.04.92

(51) Int. Cl.5: **B01D 53/04**, G01N 27/04

(43) Date de publication de la demande:
**10.11.93 Bulletin 93/45**

(84) Etats contractants désignés:
**AT BE CH DE DK ES FR GB GR IT LI LU NL PT SE**

(71) Demandeur: **SIDOBRE SINNOVA
Division HENKEL NOPCO,
185, avenue de Fontainebleau
F-77310 Saint Fargeau Ponthierry(FR)**

(72) Inventeur: **Azou, Albert
12bis rue de Rennes
F-35690 Acigne (Ille & Vilaine)(FR)**
Inventeur: **Demestrescu, Dana
10, rue Andrée
F-94470 Boissy St Leger (Val de Marne)(FR)**

(74) Mandataire: **Cabinet Pierre HERRBURGER
115, Boulevard Haussmann
F-75008 Paris (FR)**

(54) **Procédé de traitement de gaz pollués par au moins un constituant absorbant ainsi qu'installation permettant la mise en oeuvre de ce procédé.**

(57) Procédé de traitement de gaz pollués par au moins un constituant adsorbable par lequel, dans une phase d'adsorption, on fait passer le flux de gaz pollués au travers d'un réacteur renfermant un matériau adsorbant, puis on soumet périodiquement le matériau adsorbant saturé à une étape de régénération in situ de façon à provoquer la désorption des produits captés, et l'on récupère ces produits dans une étape de condensation ou on provoque leur destruction thermique et/ou biologique et/ou physico-chimique, procédé caractérisé en ce que l'on contrôle en continu les conductances différentielles du matériau adsorbant de façon à régler les paramètres du procédé et en particulier la durée de ses différentes étapes et installation caractérisée en ce qu'elle comporte, au moins, un réacteur (1) dans lequel sont mises en oeuvre les étapes d'adsorption et de régénération ainsi qu'au moins un condenseur (10, 11) dans le cas d'une condensation permettant la récupération du ou des constituants adsorbables à l'état liquide et, le cas échéant, sa ou leur réutilisation immédiate ou une unité de destruction par un des procédés susmentionnés ou analogue.

EP 0 568 747 A1

EP 0 568 747 A1

La présente invention concerne un procédé de traitement de gaz pollués par au moins un constituant adsorbable par lequel, dans une phase d'adsorption, on fait passer le flux de gaz pollués au travers d'un réacteur renfermant un matériau adsorbant, puis on soumet périodiquement le matériau adsorbant saturé à une étape de régénération in situ de façon à provoquer la désorption des produits captés, et l'on récupère ces produits pour une étape permettant leur valorisation par exemple par condensation ou pour une étape de destruction par exemple thermique et/ou biologique et/ou physico-chimique.

De nombreux processus industriels rejettent dans l'atmosphère des gaz polluants qui peuvent avoir des natures diverses ; parmi ces effluents, certains renferment des constituants adsorbables pouvant être de nature minérale ou organique.

Parmi les industries les plus polluantes, on peut, à titre d'exemple, mentionner l'industrie pétrolière, l'industrie chimique lourde, on encore tous les processus impliquant l'utilisation de solvants à grande échelle.

Pour sauvegarder l'environnement, les Autorités sont amenées à imposer des normes de plus en plus strictes qui font que les industriels sont obligés de traiter leurs effluents avant de les rejeter dans l'atmosphère.

Il est par suite indispensable de mettre au point des procédés de traitement rapides et efficaces et parallèlement satisfaisants du point de vue de l'efficacité.

Dans le cas d'effluents gazeux contenant des polluants, l'expérience a montré que le traitement le plus avantageux consistait à les faire passer dans un lit de matériau adsorbant ; le flux gazeux ressort en effet épuré de cette opération et peut alors être directement évacué à l'atmosphère.

On a déjà proposé de mettre en oeuvre de tels processus en utilisant divers matériaux adsorbants, notamment du charbon actif pouvant se présenter sous différentes formes : grains, mousse, toiles, tissus, feutres ...

Dans tous les cas, après un certain temps d'utilisation, le matériau adsorbant se trouve inefficace car saturé, et il est nécessaire de prévoir, avant toute réutilisation, une étape de régénération de façon à provoquer la désorption des produits préalablement captés.

Différents processus d'adsorption/régénération de ce type ont déjà été mis au point.

Une première possibilité consiste à effectuer la régénération par injection de vapeur d'eau sur le matériau adsorbant. Cette méthode présente, toutefois, l'inconvénient de nécessiter l'emploi d'une chaudière pour la production de vapeur d'eau ; sa mise en oeuvre n'est, en outre, pas souhaitable lorsque les produits adsorbés sont sensibles à l'hydrolyse, ce qui est, par exemple, le cas des solvants chlorés.

Une autre possibilité consiste à effectuer la régénération par injection d'air chaud. Un tel processus n'est pas lui non plus exempt d'inconvénients, compte tenu de son efficacité limitée et de l'importance des temps de régénération nécessaires ; sa mise en oeuvre ne peut, en outre, pas être envisagée en présence de composés inflammables (hydrocarbures ...).

De plus, et comme la première possibilité susmentionnée, un tel processus oblige à prévoir des investissements importants (utilisation de chaudières ...), ce qui a pour conséquence de limiter, pour des raisons économiques, son application aux installations polluantes de petite taille.

Les spécialistes de l'épuration des effluents ont plus récemment mis au point diverses méthodes dans le but de remédier aux inconvénients de ces procédés de base.

L'une de ces méthodes, qui est décrite dans le document EP-A-0 014 749 consiste à chauffer, dans une première phase, le matériau adsorbant introduit dans un dispositif particulier, puis, dans une seconde phase, à désorber les gaz captés par injection d'un flux de vapeur ; le dispositif utilisé est constitué de plusieurs colonnes ayant une base commune formant une première électrode amovible, cette électrode coopérant avec une seconde électrode placée à la partie supérieure de chaque colonne de façon à permettre le passage d'un courant électrique.

Malgré ses avantages, ce procédé n'est pas lui non plus exempt d'inconvénients, en particulier compte tenu du fait qu'il impose de transférer le matériau adsorbant saturé du réacteur dans lequel est mise en oeuvre l'étape d'adsorption, jusqu'au dispositif dans lequel est mise en oeuvre l'étape de régénération ; de plus, cette dernière étape nécessite, elle-même, la mise en oeuvre de plusieurs phases : chauffage électrique, désorption par injection de vapeur ..., ce qui nécessite des opérations ultérieures onéreuses, notamment de séchage du matériau.

Un autre processus de traitement des gaz pollués qui a récemment été proposé est décrit dans le document FR-A-2 612 799 : conformément à ce processus, l'étape d'adsorption est mise en oeuvre sur un matériau se présentant sous la forme de matelas constitués de dix à trente feuilles de charbon actif ; chaque matelas est disposé dans un tiroir dont le fond est constitué de résistances électriques.

Conformément à ce procédé, l'étape de régénération est mise en oeuvre par chauffage de ces résistances : le matériau adsorbant est ainsi chauffé indirectement, si bien que l'opération de désorption est

2

relativement longue et de faible rendement opératoire.

Parmi les processus d'épuration des gaz résiduaires connus par les spécialistes, on peut également noter ceux décrits dans les articles, "A NOVEL PROCESS FOR THE REGENERATION OF CARBON" de Cole et al. et "CARBON REGENERATION USING A RINTOUL FURNACE" de Lings qui traitent, tous deux, de l'utilisation de fours électriques pour mettre en oeuvre des opérations de régénération de charbon actif saturé ; dans les deux cas, le matériau adsorbant doit subir plusieurs traitements : il doit en effet tout d'abord être séché à l'air chaud avant d'être introduit dans le four, puis chauffé par application d'un courant électrique ; un flux de vapeur permet ensuite l'évacuation des gaz hors du réacteur. Il doit ensuite être reséché avant utilisation. Il s'agit là d'un traitement long et fastidieux, donc onéreux et qui entraîne, en outre, un risque de déstabilisation de certains composés compte tenu de l'utilisation de vapeur.

La présente invention a pour objet de remédier aux inconvénients susmentionnés en proposant un nouveau procédé de traitement de gaz résiduaires pollués par au moins un constituant adsorbable consistant de manière classique à mettre successivement en oeuvre une étape d'adsorption sur un matériau adsorbant, une étape de régénération de ce matériau une fois saturé et une étape finale par exemple de condensation permettant de récupérer les produits captés.

Conformément à l'invention, on cherche donc à mettre au point un procédé susceptible de permettre une rétention efficace des composés adsorbables et de garantir un taux de régénération élevé en phase de désorption associé à une récupération sélective et complète des composés adsorbés et désorbés, et ce sans risque de déstabilisation de ces composés de façon à permettre, le cas échéant, leur réutilisation.

Il est en outre essentiel que ce procédé soit apte à être mis en oeuvre de façon particulièrement rapide et puisse s'adapter à des installations polluantes de tailles quelconques, allant des importantes opérations industrielles aux petits flux tels qu'en station-service ou même sur les véhicules automobiles ou assimilés.

Selon l'invention, ce procédé est caractérisé en ce que l'on contrôle en continu les conductances différentielles du matériau adsorbant de façon à régler les paramètres du procédé et en particulier la durée de ses différentes étapes.

Il s'agit là d'une caractéristique essentielle de l'invention, compte tenu du fait qu'elle permet d'optimaliser aussi bien l'étape d'adsorption que l'étape de régénération, et ce, tout en garantissant un respect optimal de l'environnement.

Pour permettre cette optimalisation, il est possible, conformément à l'invention, de prévoir, lors de l'étape d'adsorption, une augmentation de la pression de façon à accroître la vitesse de réaction et à diminuer les temps de contact gaz/solide et donc à obtenir un accroissement stable du taux de piégeage des polluants.

Il est également possible de provoquer en phase de régénération/condensation une variation de la pression permettant d'obtenir un rendement maximal et évitant l'utilisation coûteuse d'un bain cryogénique.

Compte tenu de cette caractéristique, conforme à l'invention, l'installation de traitement est autogérée par le matériau adsorbant lui même, les variations de conductance consécutives aux diverses phases des cycles de travail faisant office de méthode d'analyse.

Plus précisément, le procédé conforme à l'invention permet ainsi de suivre en continu l'étape d'adsorption, l'étape de désorption et la durée de vie du matériau adsorbant : il est en effet à noter que la résistance de ce matériau varie, en phase d'adsorption, avec les quantités adsorbées et les solvants éliminés, ce qui permet la détection des durées d'utilisation, et, en phase de régénération, avec les quantités désorbées donc avec les rendements de régénération. De plus, la résistance du matériau adsorbant varie avec l'âge et les caractéristiques physico-chimiques de ce matériau (granulométrie, colmatage, compacité ...).

Selon une autre caractéristique de l'invention, on utilise, en tant que matériau adsorbant, un matériau granulaire disposé en couches et dont la granulométrie est choisie de façon à favoriser la création de régimes turbulents entre les grains et entre les couches, chaque grain se comportant comme un réacteur parfaitement agité.

Cette caractéristique permet d'optimaliser le contact intime gaz/solide et d'avoir la garantie de toujours travailler en régime turbulent, ce qui est nettement plus rentable qu'un simple flux quelconque.

Conformément à l'invention, le choix de la granulométrie résulte d'un compromis entre différents paramètres : écoulement du système, intimité du contact gaz/solide, turbulences induites ...

Dans le cas particulier du traitement de composés organochlorés légers, on a à titre d'exemple, obtenu des résultats particulièrement avantageux en choisissant une granulométrie telle que :

$$10 \leq \frac{\text{diamètre réacteur}}{\substack{\text{diamètre des grains} \\ \text{de charbon actif}}} \leq 10\ 000$$

Dans certains cas particuliers, il est possible de prévoir, dans la masse du matériau adsorbant, une série de déflecteurs de nature à améliorer le contact gaz/solide susmentionné.

Il est à noter que, lorsque le flux gazeux pénètre dans le réacteur, il subit une dépression homogène favorisant sa répartition sur la surface de la première couche de matériau adsorbant, tout en créant des turbulences à ce niveau.

Selon une autre caractéristique de l'invention, lors de l'étape de régénération, on provoque un échauffement du matériau adsorbant saturé par passage d'un courant électrique ; on crée ainsi entre l'étape de régénération et l'étape de condensation, une différence de pression entraînant une évacuation des produits désorbés par convection libre.

Conformément à cette caractéristique, les produits désorbés sont évacués du simple fait de la différence de pression induite par la différence de température entre l'étape de régénération effectuée "à chaud" et l'étape de condensation effectuée "à froid" ; cette dépressurisation assure une excellente récupération en cas de variation importante de la température. Lorsque cette variation s'avère insuffisante, la convection peut être accentuée en introduisant une convection forcée d'air ou de gaz inerte (azote, hélium ...). Il est cependant à noter que, conformément à l'invention, il n'est jamais nécessaire d'insuffler de l'air chaud ou de la vapeur d'eau pour procéder à la régénération, ce qui permet d'éviter des opérations supplémentaires (séchage ...).

Selon une autre caractéristique de l'invention, pour provoquer l'échauffement du matériau adsorbant saturé, on applique une différence de pression entre l'entrée et la sortie du flux de gaz pollué dans le matériau adsorbant.

Une telle régénération électrique n'est pas limitative et peut s'appliquer à différents matériaux adsorbants se trouvant sous différentes formes, électriquement conducteurs ou non : oxydes métalliques, zéolites, polystyrène ...

Lorsque l'on utilise un matériau adsorbant électriquement isolant, l'échauffement peut être provoqué en appliquant une différence de potentiel aux extrémités de fils conducteurs placés au sein de ce matériau.

Il est cependant particulièrement avantageux conformément à l'invention d'utiliser, en tant que matériau adsorbant, un matériau électriquement conducteur, notamment du charbon actif en grains.

Le caractère conducteur du charbon actif est dû à la présence dans sa structure de couches graphitiques orientées ; il permet ainsi son échauffement électrique direct, provoquant, de ce fait, le phénomène de désorption.

Un tel échauffement direct du matériau adsorbant évite les dépenses d'énergie classiquement nécessaires pour échauffer tout un bâti d'installation et/ou un fluide (air) à faible capacité calorifique.

Il est à noter que, durant la phase d'échauffement, la résistance du matériau adsorbant varie avec son taux d'humidité intrinsèque et avec la température. Le contrôle de l'échauffement peut, par suite, être assuré par variation d'impédance en fonction de la température ; de manière plus précise, le phénomène de désorption peut être contrôlé par modulation du courant électrique induit, la température et l'impédance étant fonction de la puissance appliquée.

Conformément à une autre caractéristique de l'invention, il est avantageux d'utiliser un matériau adsorbant présentant un caractère électrique de semiconducteur, donc à coefficient de température négatif. Cette particularité induit, en effet, une réaction d'échauffement auto-accélérée optimalisant ainsi l'opération globale de traitement.

Selon une autre caractéristique de l'invention, les étapes d'adsorption et de régénération du procédé de traitement sont, de préférence, mises en oeuvre à contre-courant.

L'invention se rapporte également à une installation pour la mise en oeuvre du procédé susmentionné.

Cette installation comporte, au moins, un réacteur dans lequel sont mises en oeuvre les étapes d'adsorption et de régénération, ainsi qu'au moins un condenseur permettant la récupération du ou des constituants adsorbables à l'état liquide et, le cas échéant, sa ou leur réutilisation immédiate, ou dans le cas possible d'une destruction, une unité d'incinération et/ou de dégradation biologique ou physico-chimique..

Conformément à l'invention, les incondensables sont, de préférence, ramenés à l'étape d'adsorption.

Selon une autre caractéristique de l'invention, le réacteur est constitué par une enceinte de préférence calorifugée comportant, d'une part, une paroi latérale munie de tubulures d'entrée et de sortie du flux de gaz pollués à traiter, et d'autre part, de parois d'extrémité au niveau desquelles sont respectivement montées deux électrodes de façon à pouvoir créer, au sein du matériau adsorbant, le courant électrique susceptible de provoquer son échauffement lors de l'étape de régénération.

Selon une variante préférentielle de l'invention, cette installation peut, avantageusement, avoir une configuration permettant la mise en oeuvre en continu du procédé de traitement des gaz pollués.

A cet effet, et selon une autre caractéristique de l'invention, l'installation comporte au moins deux réacteurs disposés en parallèle et susceptibles d'être alternativement branchés de façon à mettre en oeuvre l'étape d'adsorption ou l'étape de régénération.

Les caractéristiques du procédé et du dispositif de traitement de gaz pollués qui font l'objet de l'invention, seront décrites plus en détail en se référant aux dessins non limitatifs annexés, dans lesquels :

- la figure 1 est une vue en coupe d'un réacteur adapté à la mise en oeuvre du procédé conforme à l'invention,
- la figure 2 représente, schématiquement, l'ensemble d'une installation conforme à l'invention.

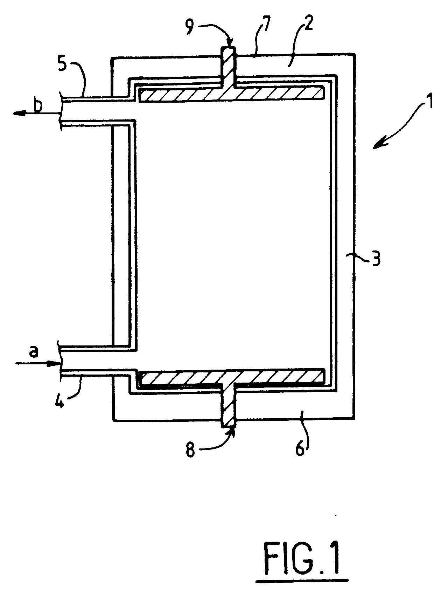

Selon la figure 1, les étapes d'adsorption et de régénération du procédé de traitement de gaz pollués sont mises en oeuvre dans un réacteur 1 schématiquement constitué par une enceinte cylindrique munie d'un calorifugeage 2 sur la totalité de sa périphérie.

Cette enceinte comporte, d'une part, des parois d'extrémité 6, 7 correspondant aux deux bases du cylindre et, d'autre part, une paroi latérale 3 dans laquelle débouchent des tubulures latérales 4 et 5 permettant l'entrée et la sortie du flux gazeux à traiter, respectivement selon les flèches a et b.

L'enceinte 1 est remplie à sa partie interne par des grains de charbon actif non représentés disposés en couches et dont la granulométrie est choisie de façon à favoriser, lors de l'introduction d'un flux gazeux selon la flèche a, la création de régimes turbulents entre les grains et entre les couches, chaque grain se comportant comme un réacteur parfaitement agité.

Des électrodes métalliques 8 et 9 sont respectivement montées au niveau des parois d'extrémité 6 et 7 du réacteur 1 ; celles-ci peuvent être reliées à un circuit non représenté comprenant un générateur de courant de façon à pouvoir créer au sein du charbon actif remplissant l'enceinte, un courant électrique susceptible de provoquer l'échauffement de ce matériau lors de l'étape de régénération. Il est à noter que dans ce réacteur, les étapes d'adsorption et de régénération sont mises en oeuvre in situ, ce qui permet de pouvoir disposer d'une unité de traitement d'une grande compacité.

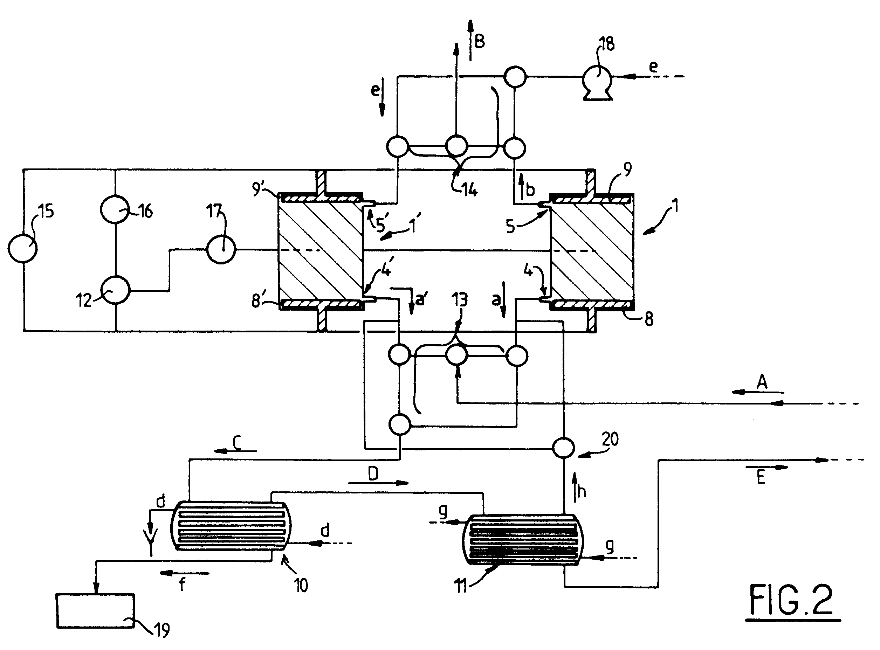

Selon la figure 2, l'installation de traitement comporte, schématiquement, deux réacteurs 1 et 1' identiques au réacteur représenté sur la figure 1 ainsi que deux condenseurs 10 et 11 qui sont montés en série pour permettre la récupération des constituants adsorbables contenus dans l'effluent gazeux à traiter d'une façon qui sera décrite plus en détail dans la suite de cet exposé.

Les réacteurs 1 et 1' sont disposés en parallèle et susceptibles d'être alternativement branchés en phase d'adsorption ou en phase de régénération de façon à permettre à l'installation de fonctionner sans interruption. Dans l'exemple de réalisation représenté sur la figure, le réacteur 1 est en phase d'adsorption tandis que le réacteur 1' est en phase de régénération.

Chacun des réacteur 1, 1' est rempli de grains de charbon actif et muni, sur sa périphérie, de tubulures d'entrée 4, 4' et de sortie 5, 5' de l'effluent gazeux à traiter. Les parois d'extrémité des réacteurs 1, 1' sont, en outre, munies d'électrodes 8, 9, 8', 9' susceptibles d'être reliées à un circuit électrique comprenant un générateur de courant 12 pour engendrer un courant électrique au sein du charbon actif de façon à permettre l'échauffement de ce matériau lors de l'étape de régénération.

De façon plus précise, conformément à la configuration représentée sur la figure 2, l'effluent gazeux à traiter qui arrive dans l'installation selon la flèche A est conduit selon la flèche a à la tubulure d'entrée 4 du réacteur 1 travaillant en mode adsorption par un système de vannes à trois voies 13.

Les constituants adsorbables de ce flux gazeux sont alors retenus sur le charbon actif contenu dans le réacteur 1 et le flux sortant est évacué par la tubulure de sortie 5 de ce réacteur selon la flèche b. Le gaz ainsi épuré est rejeté vers l'atmosphère selon la flèche B par l'intermédiaire d'un second système de vannes à trois voies 14 largement similaire au premier système 13.

De manière non représentée, le rendement de cette étape d'adsorption peut être augmenté en mettant sous pression le réacteur 1.

Dans l'exemple de configuration représenté sur la figure 2, le réacteur 1' se trouve en phase de régénération ; il est cependant à noter qu'il s'agit là d'un exemple particulier de mise en oeuvre compte tenu du fait que cette phase de régénération est d'une durée beaucoup plus brève que la phase d'adsorption, ce qui constitue l'un des nombreux avantages de l'installation.

Selon la figure 2, une différence de potentiel est appliquée au moyen du générateur 12 entre les électrodes 8' et 9' du réacteur 1', de façon à provoquer l'échauffement des grains de charbon actif contenus dans ce réacteur.

Cette phase du procédé est contrôlée en continu grâce à des organes de régulation de la température constitués, en plus du générateur 12, par un voltmètre 15, un ampèremètre 16 ainsi que des sondes ou thermocouples 17 insérés au sein du charbon actif ; il est ainsi possible d'asservir l'échauffement de celui-ci.

Conformément à la figure, les étapes d'adsorption, d'une part, et de régénération, d'autre part, sont mises en oeuvre à contre-courant.

Lors de l'étape de régénération, et suite à l'échauffement susmentionné des grains de charbon actif présents dans le réacteur 1', il se crée une différence de température donc une différence de pression entre ce réacteur et les organes de condensation qui sont constitués par les deux condenseurs 10 et 11 montés en série.

Grâce à cette dépressurisation, les gaz désorbés peuvent être évacués par convection libre selon la flèche a' par la tubulure d'entrée 4' du réacteur 1' qui fait, dans cette phase, office de tubulure de sortie ; ces vapeurs humides parviennent ainsi selon la flèche C dans le premier condenseur 10 refroidi par un circuit d'eau froide représenté par les flèches d, en passant par le système de vannes à trois voies 13.

Dans l'exemple de configuration représenté sur la figure, cette convection libre est associée à une convection forcée schématisée par le circuit e ; un léger courant d'air frais dénué de constituants adsorbables, pulsé par une pompe 18 est ainsi introduit par la tubulure de sortie 5' du réacteur 1 en passant par le système de vannes à trois voies 14. Ce renforcement de la circulation des gaz désorbés par convection forcée s'avère nécessaire lorsque cette convection libre n'assure pas le rendement de régénération souhaité pour la durée d'opération désirée.

Les vapeurs humides pénétrant dans le premier condenseur 10 sont ensuite traitées dans l'étape de condensation de façon à séparer l'eau des composés désorbés.

Conformément à la figure, ces vapeurs humides sont, tout d'abord, traitées dans le premier condenseur 10 refroidi par une circulation d'eau froide schématisée par les flèches d. A ce niveau, l'eau condensée récupérée est amenée selon la flèche f au bac de stockage 19 avant d'être rejetée.

Cette opération de séchage des vapeurs désorbées permet d'éviter des encrassages et le surdimensionnement de l'unité de condensation ; elle peut s'avérer inutile si la proportion d'humidité dans les gaz désorbés n'est pas trop élevée.

Il est à noter que cette opération peut donner lieu à un certain nombre de variantes de mise en oeuvre, notamment en utilisant des produits de dessiccation classiques (gel de silice, alumine ...).

Selon la figure, les vapeurs sèches quittant le condenseur 10, selon la flèche D, sont véhiculées vers le condenseur 11 qui est un condenseur classique refroidi par un fluide frigorigène circulant selon les flèches g. La température de ce fluide peut varier en fonction des produits à récupérer et des conditions opératoires (vitesse de circulation, pression opératoire ...).

A la sortie de ce condenseur, le condensat est évacué selon la flèche E en vue d'une réutilisation ultérieure, tandis que les produits incondensables sont ramenés selon la flèche h dans l'étape d'adsorption (réacteur 1) en passant par une vanne annexe 20.

Lorsque le contrôle de la conductance du charbon actif contenu dans le réacteur 1 indique que celui-ci est totalement saturé, les différentes vannes de l'installation sont automatiquement commandées de façon à brancher ce réacteur en mode régénération ; le réacteur 1' passe alors en mode d'adsorption.

L'installation est ainsi totalement automatisée.

L'un des nombreux avantages de l'installation susmentionnée conforme à l'invention est lié au fait que la seule sortie possible des constituants polluants est leur liquéfaction, ce qui permet de respecter les législations par un rejet au zéro industriel.

L'étape de régénération peut également être asservie à la concentration en gaz désorbés. L'arrêt de la désorption intervient ainsi automatiquement lorsque la concentration polluante évacuée devient égale à la pression de vapeur saturante du polluant à la température de condensation désirée (dans les conditions adéquates de vitesse et de pression).

Les caractéristiques et avantages du procédé ainsi que de l'installation qui font l'objet de l'invention seront, en outre, détaillés à l'aide des exemples mentionnés ci-dessous.

Exemple 1

On a réalisé le traitement d'un flux d'air pollué par 2 g/m$^3$ de vapeur de chlorure de méthylène dans une installation conforme à l'invention telle que représentée sur la figure 2, dans laquelle les réacteurs avaient un diamètre interne de 40 mm et étaient remplis de grains de charbon actif sur une hauteur de 160 mm ; la masse totale de charbon était de 110 g. On a réglé arbitrairement la vitesse de l'effluent gazeux arrivant dans l'installation (phase d'adsorption) à 2000 m par heure, ce qui correspondait à un débit à traiter égal à 2,5 m³/heure.

Selon cet exemple, le fonctionnement de l'installation a été réglé en contrôlant, pour chaque réacteur, le temps de percée qui est défini comme le temps au bout duquel on observe à la sortie du réacteur un pic polluant égal à 10 ppm : on considère alors que l'absorbant est saturé et on commute le réacteur en phase de régénération.

Il est à noter que pour un réacteur donné et une vitesse de passage donnée de l'effluent gazeux, il existe une épaisseur de charbon minimale en-deçà de laquelle la percée se produit au temps zéro, et qui correspond donc à la hauteur minimale à mettre en oeuvre pour pouvoir obtenir 100 % d'épuration ; dans le présent exemple, on a déterminé que cette hauteur minimale Zo était égale à 8 cm.

Conformément au présent exemple, on a pu déterminer que la durée de la première phase d'adsorption (jusqu'à la percée) s'est élevée à 2,63 heures, ce qui correspondait à une quantité absorbée de 120 mg de chlorure de méthylène par gramme de charbon actif.

Après cette première phase d'adsorption, on a élevé par échauffement électrique la température du réacteur jusqu'à une valeur de 110 ± 10°C en environ 5 mn ; la puissance appliquée à cet effet a été d'environ 15 Watts pour la totalité de la surface développée du réacteur utilisé, ce qui correspond à une puissance de 1500 Watts par m² de réacteur. Il est à noter que le maintien d'une température de l'ordre de 110°C permet d'éviter la décomposition du chlorure de méthylène qui intervient au-delà de 120°C.

Après stabilisation de la température du réacteur à cette valeur de 110 ± 10°C, on a mis en oeuvre la phase de régénération en testant successivement deux vitesses de l'air de désorption (convection forcée) : 40 m/h et 100 m/h.

La phase de désorption a été combinée à une phase de condensation successivement mise en oeuvre dans des conditions isobares à une température de 0°C et à une température de -20°C ; le choix de la température de l'étape finale de condensation détermine la durée de la phase de régénération qui correspond au temps pendant lequel il est possible de condenser le produit avant la saturation du gaz désorbé (dans le cas du chlorure de méthylène celle-ci est de 650 g par m³ à 0°C et 250 g par m³ à -20°C).

Les produits incondensables obtenus ont été ramenés en phase d'adsorption. Ce renvoi a permis de calculer la capacité utile du charbon actif qui correspond au pourcentage de la capacité totale (120 mg de chlorure de méthylène par gramme de charbon actif dans cet exemple) pouvant être régénéré.

A la fin de la phase de régénération, on a refroidi le réacteur à température ambiante par conversion forcée d'air pollué pendant environ 10 mn de façon à refroidir le réacteur avant d'effectuer une autre phase d'adsorption.

Le tableau 1 ci-dessous résume les paramètres opératoires et les résultats obtenus :

## TABLEAU 1

| Température du bain de condensation finale (°C) | Saturation gazeuse à la température du bain de condensation final (g/m³) | Vitesse de l'air de désorption (m/h) | Durée phases de désorption (minutes) | Rendement désorption $\dfrac{CH_2Cl_2\ \text{désorbé}}{CH_2Cl_2\ \text{adsorbé}}$ % | Durée phases adsorption autres que la phase préliminaire (minutes) | Capacité utile du charbon actif (mg/g) |
|---|---|---|---|---|---|---|
| 0 | 650 | 40 | 7 | 17 | 26 | 20 |
| 0 | 650 | 100 | 3 | 8 | 13 | 10 |
| -20 | 250 | 40 | 150 | 82 | 129 | 98 |
| -20 | 250 | 100 | 40 | 75 | 118 | 90 |

Il est à noter que l'installation conforme à l'invention permet d'obtenir des résultats nettement plus avantageux que les installations classiques, notamment celle décrite dans le document FR-A 2 612 749 dans laquelle les grains de charbon actif sont remplacés par un tissu du type toile d'une épaisseur de l'ordre de 0,5 mm et d'un poids de l'ordre de 110 g/m³. En effet, conformément à l'art antérieur, la faible épaisseur des tissus entraîne une fuite prématurée à la percée, et ne permet en outre pas un réglage fin du temps de percée : les exemples cités dans le document FR-A 2 612 799 mentionnent un arrêt de la phase d'adsorption pour des teneurs en agent polluant égales à 110 ppm, ce qui ne permet pas de respecter les législations récentes relatives au traitement des solvants chlorés.

De plus, les travaux sur tissu nécessitent en phase d'adsorption des vitesses de passage faibles de l'ordre de 360 m/h (au lieu de 2000 m/h) d'où il résulte un encombrement important : à titre d'exemple, selon l'exemple 1, pour réaliser le traitement d'un flux d'air pollué par 2 g/m$^3$ de chlorure de méthylène à une vitesse de passage en phase d'adsorption réglée à 2000 m/h, la hauteur minimale de charbon à mettre en oeuvre est de 8 cm pour éviter toute fuite prématurée de polluant à l'atmosphère.

Pour 110 g de charbon actif utilisé, les dimensions des réacteurs à mettre en oeuvre sont les suivantes :

| | |
|---|---|
| - charbon en grains (exemple 1) : | diamètre : 5 cm<br>hauteur : 11,2 cm |
| soit 2,2 10-4 m$^3$ | |
| - charbon en toiles (brevet FR 2 612 799) : | côté : 20 cm<br>hauteur : 25 cm |
| soit 10 -2 m$^3$ | |

Il en résulte que l'installation est environ 50 fois plus compacte dans le cas de charbon actif en grains.

Exemple 2

En vue d'une comparaison avec l'exemple 1, on a traité selon le protocole susmentionné dans la même installation, un flux d'air pollué par 2 g/m$^3$ en vapeur de tétrachloréthylène.

La vitesse de passage en phase d'adsorption a également été réglée à 2000 m/h, et on a constaté pour la première phase d'adsorption (jusqu'à la percée) une durée de 13,75 heures correspondant à une quantité adsorbée de 628 mg de tétrachloroéthylène par gramme de charbon actif.

Après la fin de la première phase d'adsorption, la température du réacteur a été élevée par échauffement électrique jusqu'à 140 ± 10°C, 150°C étant la température maximale d'utilisation du tétrachloréthylène avant décomposition.

On a ensuite opéré selon l'exemple 1 en mettant en oeuvre une phase de régénération suivie d'une condensation des gaz désorbés puis un refroidissement à l'ambiante du réacteur.

Le tableau 2 ci-dessous résume les valeurs obtenues :

TABLEAU 2

| | | | | |
|---|---|---|---|---|
| Température du bain de condensation finale ($^{\circ}$C) | 0 | 0 | -20 | -20 |
| Saturation gazeuse à la température du bain de condensation finale (g/m$^3$) | 68 | 68 | 22 | 22 |
| Durée de la première phase d'adsorption (heures) | 13,75 | 13,75 | 13,75 | 13,75 |
| Vitesse de l'air de désorption (m/h) | 40 | 100 | 40 | 100 |
| Durée phases de désorption (minutes) | 50 | 30 | 110 | 70 |
| Rendement désorption $= \dfrac{C_2Cl_4 \text{ désorbé}}{C_2Cl_4 \text{ adsorbé}}$ (%) | 16 | 30 | 23 | 40 |
| Durée phases ultérieures d'adsorption (minutes) | 131 | 247 | 224 | 330 |
| Capacité utile du charbon actif (mg/g) | 100 | 188 | 170 | 251 |

Exemple 3

On a maintenant traité suivant le même protocole et dans la même installation que dans les exemples 1 et 2, un flux d'air pollué par 2 g/m$^3$ de vapeur de styrène.

On a également réglé la vitesse de passage en phase d'adsorption à une vitesse de 2000 m/h.

A la fin de la première phase d'adsorption, la quantité adsorbée était de 210 mg de styrène par gramme de charbon actif.

A la fin de cette phase d'adsorption, on a comme dans les exemples 1 et 2 chauffé le réacteur cette fois jusqu'à une température de 180 ± 10°C puis mis en oeuvre une phase de régénération à l'aide d'un courant d'air se déplaçant à 100 m/h, associé à une étape de condensation à 0°C.

Là encore, on a ainsi pu obtenir des résultats satisfaisants du point de vue de l'épuration.

Il s'agit là d'un avantage tout particulier de l'invention vu qu'il est impossible d'utiliser pour l'adsorption du styrène des supports fibreux classiques du type mousse, tissu, toile de charbon actif ..., compte tenu du fait que ces supports absorbants ne résistent pas aux températures auxquelles il faut travailler lors de l'étape de régénération compte tenu du caractère peu volatil du styrène. De plus, la présence de catalyseurs, de fonctions de surface ... favorise les intersections chimiques covalentes.

Par suite, pour l'adsorption du styrène, seuls peuvent être envisagés des matériaux adsorbant dans la masse, tels que des granulés de charbon actif ou le cas échéant d'autres supports tels que par exemple des polymères thermoplastiques ; dans ce dernier cas cependant, l'adsorption doit être suivie d'une combustion contrôlée et la régénération n'est pas possible.

Dans le cas particulier du présent exemple, le contrôle continu des variations de conductivité permet à l'installation de fonctionner sans qu'il y ait dégradation (oxydation, polymérisation) du styrène.

On a en effet pu déterminer que la phase d'adsorption du styrène se déroule en fait en deux étapes :

- dans la première étape qui s'arrête environ à 20 % de la quantité de styrène adsorbée à la percée, la résistance du charbon actif varie beaucoup : il s'agit là de l'adsorption en monocouche sur les grains de charbon actif, et le changement de surface conductrice implique une grande variation de la résistance.
- dans la deuxième étape, la résistance du charbon actif varie beaucoup moins : il s'agit là de l'adsorption en multicouche, c'est-à-dire que tous les grains de charbon actif étant revêtus d'une couche de charbon, on est en présence d'interaction styrène/styrène et non charbon/styrène ; il y a donc peu de changement d'état de surface et, par suite, peu de variation de la résistance.

Compte tenu de cette particularité, pour ne pas dégrader le styrène lors de la désorption, il convient de veiller à travailler avec un rapport tension/intensité (= résistance) constant ou variant peu pour s'assurer de demeurer dans la zone correspondant à la seconde étape de l'adsorption, c'est-à-dire celle où l'on ne désorbe que les couches extérieures à interaction styrène/styrène ; compte tenu de cette particularité, le rendement théorique de l'opération est limité aux alentours de 80 %.

En effet, si l'on remonte jusqu'à la zone correspondant à la première étape correspondant à l'enlèvement des premières couches d'adsorption (interaction charbon/styrène), il y a un risque de polymérisation et de destruction de l'effluent, ce que l'on cherche justement à éviter.

## Revendications

1. Procédé de traitement de gaz pollués par au moins un constituant adsorbable par lequel, dans une phase d'adsorption, on fait passer le flux de gaz pollués au travers d'un réacteur renfermant un matériau adsorbant, puis on soumet périodiquement le matériau adsorbant saturé à une étape de régénération in situ de façon à provoquer la désorption des produits captés, et l'on récupère ces produits pour leur valorisation par exemple par condensation ou pour leur destruction thermique et/ou biologique et/ou physico-chimique, procédé caractérisé en ce que l'on contrôle en continu les conductances différentielles du matériau adsorbant de façon à régler les paramètres du procédé et en particulier la durée de ses différentes étapes.

2. Procédé selon la revendication 1, caractérisé en ce que, en tant que matériau adsorbant, on utilise un matériau granulaire disposé en couches et dont la granulométrie est choisie de façon à favoriser la création de régimes turbulents entre les grains et entre les couches, chaque grain se comportant comme un réacteur parfaitement agité.

3. Procédé selon l'une quelconque des revendications 1 et 2, caractérisé en ce que, lors de l'étape de régénération, on provoque un échauffement du matériau adsorbant saturé par passage d'un courant électrique de façon à créer entre l'étape de régénération et l'étape suivante de condensation par exemple, une différence de pression entraînant une évacuation des produits désorbés par convection libre.

4. Procédé selon la revendication 3, caractérisé en ce que, pour provoquer l'échauffement du matériau adsorbant saturé, on applique une différence de pression entre l'entrée et la sortie du flux de gaz pollués dans le matériau adsorbant.

5. Procédé selon l'une quelconque des revendications 1 à 4, caractérisé en ce que le matériau adsorbant est un matériau électriquement conducteur, notamment du charbon actif en grains.

6. Procédé selon la revendication 5, caractérisé en ce que le matériau adsorbant présente un caractère électrique de semi-conducteur de façon à induire un échauffement et donc une désorption auto-accélérés.

7. Procédé selon l'une quelconque des revendications 1 à 6, caractérisé en ce que l'on met en oeuvre les étapes d'adsorption et de régénération à contre-courant.

8. Installation pour la mise en oeuvre du procédé selon l'une quelconque des revendications 1 à 7, caractérisée en ce qu'elle comporte, au moins, un réacteur (1) dans lequel sont mises en oeuvre les étapes d'adsorption et de régénération ainsi que le cas échéant au moins un condenseur (10, 11) permettant la récupération du ou des constituants adsorbables à l'état liquide et, éventuellement, sa ou leur réutilisation immédiate ou au moins une unité de destruction thermique et/ou biologique et/ou physicochimique.

9. Installation selon la revendication 8, caractérisée en ce que le réacteur (1) est constitué par une enceinte de préférence calorifugée comportant, d'une part, une paroi latérale (3) munie de tubulures d'entrée (4) et de sortie (5) du flux de gaz pollués à traiter, et d'autre part, de parois d'extrémité (6, 7) au niveau desquelles sont respectivement montées deux électrodes (8, 9) de façon à pouvoir créer, au sein du matériau adsorbant, le courant électrique susceptible de provoquer son échauffement lors de l'étape de régénération.

10. Installation selon l'une quelconque des revendications 8 et 9, permettant la mise en oeuvre en continu du procédé selon l'une quelconque des revendications 1 à 7, caractérisée en ce qu'elle comporte deux réacteurs (1, 1') disposés en parallèle et susceptibles d'être alternativement branchés de façon à mettre en oeuvre l'étape d'adsorption ou l'étape de régénération.

FIG.1

FIG.2

EP 0 568 747 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 284 068 (AMEG FRANCE) <br> & FR-A-2 612 799 <br> * colonne 4, ligne 30 - colonne 11, ligne 32; figure 4 * | 1 | B01D53/04 <br> G01N27/04 |
| D,A | | 2,5,8,10 | |
| Y | US-A-4 038 050 (FRANK EUGENE LOWTHER) <br> * colonne 5, ligne 61 - colonne 10, ligne 33; figures 1-3 * | 1 | |
| A | | 3,5,6,8, 9 | |
| A | EP-A-0 381 942 (PERO KG) | | |
| A | US-A-4 737 164 (VELI SARKKINEN) | | |
| A | US-A-4 594 135 (ARTHUR L. GOLDSTEIN) | | |

DOMAINES TECHNIQUES
RECHERCHES (Int. Cl.5)

B01D
G01N

Le présent rapport a été établi pour toutes les revendications

| Lieu de la recherche | Date d'achèvement de la recherche | Examinateur |
|---|---|---|
| LA HAYE | 28 DECEMBRE 1992 | BOGAERTS M.L.M. |